# EUROPEAN PATENT APPLICATION

(11) **EP 3 007 112 A1**
(43) Date of publication of application: **13.04.2016**
(21) Application number: 14188038.5
(22) Date of filing: 08.10.2014
(51) Int. Cl.: G06Q 10/00

(54) **Handling of information on incidents**

(71) Applicant: Deutsche Post AG, 53113 Bonn (DE)
(72) Inventor: Speich, Jan, 53757 Sankt Augustin (DE); Larsson, Tobias, 53115 Bonn (DE); Heiart, Michael, 59457 Werl (DE)
(74) Representative: Cohausz & Florack

(57) **Abstract**

When an indication of an incident is received, it may be determined whether the incident is located in an area that is defined to surround an entity of a supply chain network and whether the entity of the supply chain network is relevant for a shipment associated with a company. The entity is one of a supply chain node and a supply chain lane. A reporting of the incident to a user may be caused, in case at least one criterion is met. The at least one criterion comprises that it is determined that the incident is located in an area that is defined to surround an entity of the supply chain network and that the entity of the supply chain network is relevant for a shipment associated with the company. A company may make use of the report for an incident monitoring.

## Description

### FIELD OF THE INVENTION

The invention relates to the handling of information on incidents, in particular the handling of information on incidents potentially affecting shipments.

### BACKGROUND

Many companies rely for smooth operation on a supply with different kinds of goods arriving as scheduled. Supply chains of companies, however, may be affected by various kinds of incidents. Possible incidents may include natural disasters, socio political incidents, hazards and operational incidents. Such incidents may disrupt a supply chain or delay shipments for a considerable period of time.

A supply chain risk and disruption management may therefore be an important topic for a company. It may save costs in the case of severe incidents and even turn a disruption of a supply chain into a competitive advantage, in case competitors affected by the same disruption missed to provide for the risk.

The input from various sources can be used to perform risk assessment and incident monitoring as a basis for a supply chain risk and disruption management. Incident monitoring may allow reacting flexibly in the case of unforeseen events. This may include securing of scarce material as well as transport and production resources during a disaster, avoiding or limiting emergency logistics costs due to unplanned coordination of mitigation actions, and saving time for production resourcing, re-planning and alternative sequencing.

### SUMMARY OF SOME EMBODIMENTS OF THE INVENTION

The invention is based on the consideration that the number of incidents occurring on a global scale and potentially affecting shipments is significant. If available information on all of these incidents is reported to a user, the amount of information may be too large to handle in a sensible manner.

It is an object of the invention to enhance the reporting of incidents to users.

The object is solved with a method according to claim 1, an apparatus according to claim 10, a system according to claim 12, a use according to claim 13, a computer program according to claim 14 and a computer program product according to claim 15. Further embodiments are defined in the dependent claims.

An embodiment of a method according to the invention comprises, performed by at least one apparatus, receiving an indication of an incident. The method further comprises determining whether the incident is located in an area that is defined to surround an entity of a supply chain network, the entity being one of a supply chain node and a supply chain lane, and whether the entity of the supply chain network is relevant for a shipment associated with a company. The method further comprises causing a reporting of the incident to a user in case at least one criterion is met, the at least one criterion comprising that it is determined that the incident is located in an area that is defined to surround an entity of the supply chain network and that the entity of the supply chain network is relevant for a shipment associated with the company.

Thus, the invention provides for certain embodiments that when an indication of an incident is received, it is checked, whether the incident is in an area defined to surround any supply chain node or any supply chain lane of a supply chain network. A supply chain node could be for instance, though not exclusively, a transport node like a transshipment center, a transport hub, an airport, or a sea port, but it could equally be for instance a factory or another facility of a particular company, of a supplier of the company or of a customer of the company, or any other kind of node. In the context of this document, a company can be any entity making direct or indirect use of shipments. For example, it may be any kind of private or public association or agency, and it may be any kind of profit or non-profit organization. Furthermore, it may be of any size, including a one-man concern. A supply chain lane could be for instance any kind of transport lane, for instance, though not exclusively, a road, a railway, an air lane or a shipping lane. In addition, it is checked whether a supply chain node or supply chain lane is relevant for a shipment associated with a particular company. A shipment may be considered to be associated with a company, for instance, in case the company is addresser or addressee of the shipment, but also, for instance, in case the shipment is addressed to a business partner of the company, which is supposed to forward the shipment to the company, possibly after some processing of the content of the shipment. Only if the incident is located in a defined area surrounding a supply chain node or supply chain lane and the supply chain node or supply chain lane is actually relevant for a shipment, the incident may be reported to a user. The user could be for example, though not necessarily, an employee or some other kind of member of the company. The user could also be for instance any other person authorized by the company to receive reports on incidents. The term user may also refer to a group of users.

It is a possible advantage of the invention that detected incidents may be filtered to reduce the number of incidents that are reported to a user. A filtering may be performed by considering only those incidents that are close to an entity of a supply chain network, that is, to a supply chain node or supply chain lane. If this is not the case, the incident may not be relevant for shipments that are transported in the supply chain network. Furthermore, a filtering may be performed by considering only those incidents that are close to entities of the supply chain network at which a shipment associated with the company is present or expected. If this is not the case, the incident may not be relevant for shipments of the particular company. Such a filtering of indicated incidents may be of particular value for companies relying on a significant number of shipments. In some use cases, the filtering may not only reduce the workload of personnel evaluating reported incidents but enable human evaluation of and reaction to incidents in the first place. It is to be understood that further criteria may be defined that have to be met in addition before an incident is reported to a user.

An embodiment of an apparatus according to the invention comprises means for performing the actions of any embodiment of the presented method. The apparatus can be for example a server or a module for a server. The means could be hardware means, software means or a combination of both.

An embodiment of an apparatus according to the invention comprises at least one processor and at least one memory. The at least one memory stores a computer program. The at least one memory and the computer program are configured to cause an apparatus to perform any one embodiment of the presented method, when the computer program is executed by the at least one processor. Thus, the at least one memory and the computer program are configured to cause an apparatus to perform at least the following, when the computer program is executed by the at least one processor: receiving an indication of an incident; determining whether the incident is located in an area that is defined to surround an entity of a supply chain network, the entity being one of a supply chain node and a supply chain lane, and whether the entity of the supply chain network is relevant for a shipment associated with a company; and causing a reporting of the incident to a user in case at least one criterion is met, the at least one criterion comprising that it is determined that the incident is located in an area that is defined to surround an entity of a supply chain network and that the entity of the supply chain network is relevant for a shipment associated with the company.

The apparatus may be implemented software-wise to perform the method. Implemented software-wise is to be understood to be a preparation of the apparatus that is required in order to enable a computer program stored in the at least one memory to be executed by the at least one processor in order to cause an apparatus to perform actions defined by the computer program. A processor can be for instance one or more control units, microprocessors, microcontroller units like microcontrollers, digital signal processors (DSP), application-specific integrated circuits (ASIC) or field programmable gate arrays (FPGA). A memory can be for instance an integrated data and program storage of the apparatus, an integrated dedicated program storage of the apparatus, a main storage of the at least one processor or a removable storage. A data and program storage or a program storage can be, among other things, a non-volatile storage. A main storage can be, among other things, a volatile or non-volatile storage, in particular a random access memory (RAM) and/or a flash memory. A non-volatile storage may be for instance a storage enabling random access, like a NOR flash memory, or a storage enabling sequential access, like a NAND flash memory, and/or a storage with read-only access (ROM), like an EPROM, EEPROM, or ROM. A removable storage could be for instance a memory stick or a CD-ROM.

An embodiment of a system according to the invention comprises means for performing the actions of any one embodiment of the presented method. The means may be included in a single apparatus or be distributed to a plurality of apparatuses. The means may be realized in hardware, software or a combination of both, for instance with at least one processor and at least one memory storing a computer program. Certain embodiments of the system may include in addition a database storing information on entities of at least one supply chain network and/or some other database, like a database storing information on alternative routes. Certain embodiments of the system may include in addition at least one apparatus providing indications of incidents.

An embodiment of a use according to the invention may comprise a use of a report of an incident to a user caused by the system for an incident monitoring. The incident monitoring may be performed by means of a user device. It may be performed for information only, or as a basis for an incident management.

An embodiment of a computer program according to the invention is configured to cause at least one apparatus to perform the actions of any one embodiment of the presented method when executed by at least one processor.

A computer program may be stored in a computer readable medium. A computer program may equally be distributed via a network, for example a local network, a wide area network, a virtual network, a radio network like a mobile communications network, some other telephone network and/or the Internet. A computer program can be at least partly software and/or firmware of a processor. It is to be understood that the term computer program is also meant to cover a composition of several computer programs.

An embodiment of a computer readable medium may store any one embodiment of the presented computer program. The computer readable medium is to be understood to be a non-transitory computer readable medium. The computer readable medium may be for instance a magnetic, electrical, electro-magnetic, optical and/or any differently implemented storage medium. The computer readable medium can be removable and portable, or it may be configured to be permanently integrated in an apparatus. "Computer readable" means that the medium can be read and/or written by a computer or a data processing unit, for instance a processor. It can be for instance a program storage of a processor.

In certain embodiments of the presented method, the entities of the supply chain network may be entities of a general supply chain network or entities of a company specific supply chain network including only those entities that are of potential relevance for shipments that are associated with a particular company. A company specific supply chain network could comprise for instance a transport network involved in obtaining and distributing shipments for the company. Optionally, it could also comprise facilities of the company and/or of suppliers of the company and/or customers of the company. Suppliers and customers could comprise only direct suppliers and customers but equally indirect suppliers and customers. Any supply chain network may be modeled for instance based on shipments that have been delivered by at least one logistics service provider and/or based on input by the company, but equally based on information obtained from other sources.

An example embodiment of the presented method may comprise making use of data about the supply chain network stored in a supply chain network database as a basis for determining whether the incident is located in an area that is defined to surround an entity of a supply chain network. Using a supply chain network database may have the advantage that the required data is readily available whenever needed. In such an embodiment, the supply chain network can be but does not have to be a company specific supply chain network. If the supply chain network is a company specific supply chain network, the data about the supply chain network may but does not have to result from a modelling of the company specific supply chain network based on shipments transported for the company in the past. This may have the advantage that the data about the supply chain network can be expected to match the needs of the company, while avoiding the need to store and process unnecessary data. It is to be understood, however, that the company could also provide, for example, information on entities that are expected to be used for the first time in the near future, and this information could be included in data about a supply chain network.

An example embodiment of the presented method may comprise making use of data about shipments associated with the company stored in a shipment database of a logistics service provider as a basis for determining whether the entity of the supply chain network is relevant for a shipment associated with the company. This may have the advantage that data on shipments that is available and regularly updated anyhow can be exploited. This may further have the advantage that in certain embodiments the data for a supply chain network can be assembled automatically and quite comprehensively with no or reduced burden on the company.

In an example embodiment of the presented method, the entity of the supply chain network is relevant for a shipment associated with the company if a shipment associated with the company is present at the entity of the supply chain network and/or if a shipment associated with the company is scheduled to arrive at the entity of the supply chain network. Shipments that are already present at the entity of the supply chain network may be at a particular risk of being affected by the incident. For shipments that are only scheduled to arrive at the entity, more alternatives in reacting to the incident - for instance by re -routing - may be available.

In an example embodiment of the presented method, the entity is a supply chain node and the area surrounding the supply chain node is a circular area with a predetermined radius, or the entity is a supply chain lane and the area surrounding the supply chain lane is a corridor of a predetermined width. Both types of areas may have the advantage that they are easy to define and easy to adjust in size. It is to be understood, however, that any other shape of areas may be used as well, like a square area surrounding a supply chain node, a rectangular area surrounding a supply chain lane, or a polygon-shaped area surrounding a node or a lane.

In an example embodiment of the presented method, a size of the area surrounding the entity is defined by at least one of the following: a default value, one of a plurality of default values predetermined for different severity levels of incidents, one of a plurality of default values predetermined for different types of entities, one of a plurality of default values predetermined for different categories of incidents, a value defined by a user, one of a plurality of values defined by a user for different severity levels of incidents, one of a plurality of values defined by a user for different types of entities, and one of a plurality of values defined by a user for different categories of incidents. Different types of entities may not only be supply chain nodes and supply chain lanes, but equally different types of supply chain nodes and/or different types of supply chain lanes. Different categories of incidents may comprise for example weather incidents and strike incidents. Using different values may have the advantage that they may be particularly suited for different situations. Using one or more default values may have the advantage that a user is not forced to select a value but may rely on the experience of a service provider. Enabling the use of one or more user specific values may have the advantage that the value may be adjusted to the particular needs of a user. For instance, a user who belongs to a company which receives or dispatches a very large number of shipments that may not be too time-critical may only wish to consider incidents fairly close to used entities, even if or unless the incident is extremely severe. A user who belongs to a company which receives or dispatches rather few shipments that are very time critical - for example due to contracts that are to be fulfilled, due to the shipments containing perishable goods, or due to high costs if production machines have to be stopped in case of a delayed shipment - may wish to consider most incidents in large areas around concerned entities. It has to be noted that a user defining default values may be the same user to whom incidents are reported or another user. For example, a first member of a company could define default values, while the monitoring of incidents could be performed by at least one other user. In certain embodiments, different users could also be enabled to define different default values for entities of a single company supply chain network.

In an example embodiment of the presented method, the incident is reported to the user only, in case at least one additional criterion is met. Such at least one additional criterion could comprise the incident being an incident of a predetermined category of incidents and/or the incident being an incident of a category of incidents selected by a user and/or the incident being at least of a predetermined severity and/or the incident being at least of a severity selected by a user and/or the entity being of a minimum relevance for the company. This may have the advantage that incidents that are provided to the user may be filtered further. This may relieve for instance a user taking care of monitoring the reported incidents for the company, in particular if the number of incidents that would be reported otherwise would still be overwhelming for efficient analysis and decision taking. To provide some examples, at least one apparatus performing the actions of an example embodiment of the invention could generally filter all minor incidents, while some users may request to filter in addition all moderate incidents. Furthermore, for example, at least one apparatus performing the actions of an example embodiment of the invention could generally filter all incidents that are not of a predetermined category "transportation". Furthermore, for example, incidents potentially affecting an entity that is used rarely for a particular company, for instance only once a year, might be filtered on a general basis or if requested by the user. It is to be understood that such further filtering can be performed before and/or after and/or during the previously described filtering. It has to be noted that a user defining the additional criteria may be the same user to whom incidents are reported or another user. In certain embodiments, different users could also be enabled to define different criteria with respect to the company.

An example embodiment of the presented method may comprise, in case it is determined that the entity of the supply chain network is relevant for a shipment associated with the company - and optionally that at least one additional criterion is met -, determining an action to be carried out in response to the incident and/or causing an action to be carried out in response to the incident and/or providing a suggestion of an action to be carried out in response to the incident to the user and/or determining alternative routes to be used for the shipment and/or determining alternative routes to be used for the shipment based on data obtained from a database storing information on routes that have been taken successfully for previous shipments. Any of these options may have the advantage that the user, to whom an incident is reported, may be supported in dealing with the reported incident.

An example embodiment of the presented method may comprise, in case it is determined that the incident is located in an area that is defined to surround an entity of a supply chain network, determining whether the entity of the supply chain network is relevant for a shipment associated with any of a plurality of companies; and causing a reporting of the incident to a respective one of a plurality of users in case at least one criterion is met, the at least one criterion comprising that it is determined that the entity of the supply chain network is relevant for a shipment associated with the respective company. This may have the advantage that a reported incident may be processed at least partly in common for several companies, which may save processing time.

In this example embodiment, the supply chain network could be a single general supply chain network that has been modelled for a plurality of companies.

In an alternative example embodiment of the presented method dealing with a plurality of companies, the supply chain network is a company specific supply chain network, and the method comprises determining for a plurality of companies whether the incident is located in an area that is defined to surround an entity of a company specific supply chain network of a respective company; in case it is determined that the incident is located in an area that is defined to surround an entity of at least one company specific supply chain network, determining whether the entity of the at least one company specific supply chain network is relevant for a shipment associated with the respective company of the at least one company specific supply chain network; and causing a reporting of the incident to a respective user in case at least one criterion is met, the at least one criterion comprising that it is determined that the entity of the company specific supply chain network is relevant for a shipment associated with the respective company. This embodiment may equally have the advantage that a reported incident may be evaluated for several companies, which may save processing time. At the same time, the reports may be customized for each company. In case the areas are defined by default values, determining for a plurality of companies whether the incident is located in an area that is defined to surround an entity of a company specific supply chain network of the respective company could comprise determining whether the incident is located in an area that is defined to surround an entity of a general supply chain network and then determining for the plurality of companies whether such an entity belongs as well to the company specific supply chain network of a respective company.

Other example embodiments of the invention will be described in the following with reference to the figures. It has to be noted that the figures are only provided for illustration of the general concept of the invention by means of examples, not for defining the scope of protection of the invention. The figures are not drawn to scale. Features shall not be considered to be essential for the present invention because they are depicted in the figures.

### BRIEF DESCRIPTION OF THE FIGURES

- Fig. 1: is a block diagram of an example embodiment of an apparatus according to the invention;
- Fig. 2: is a flow chart illustrating an example embodiment of a method according to the invention;
- Fig. 3: is a block diagram of an example embodiment of a system according to the invention;
- Fig. 4: is a flow chart illustrating a first example operation in the system of Figure 3;
- Fig. 5: is a flow chart illustrating a second example operation in the system of Figure 3;
- Fig. 6: is a flow chart illustrating a third example operation in the system of Figure 3; and
- Fig. 7: is a further block diagram of an example embodiment of a system according to the invention.

### DETAILED DESCRIPTION OF THE FIGURES

The invention will be described in the following with reference to example embodiments, which support a filtering of incidents that are to be reported to a user.

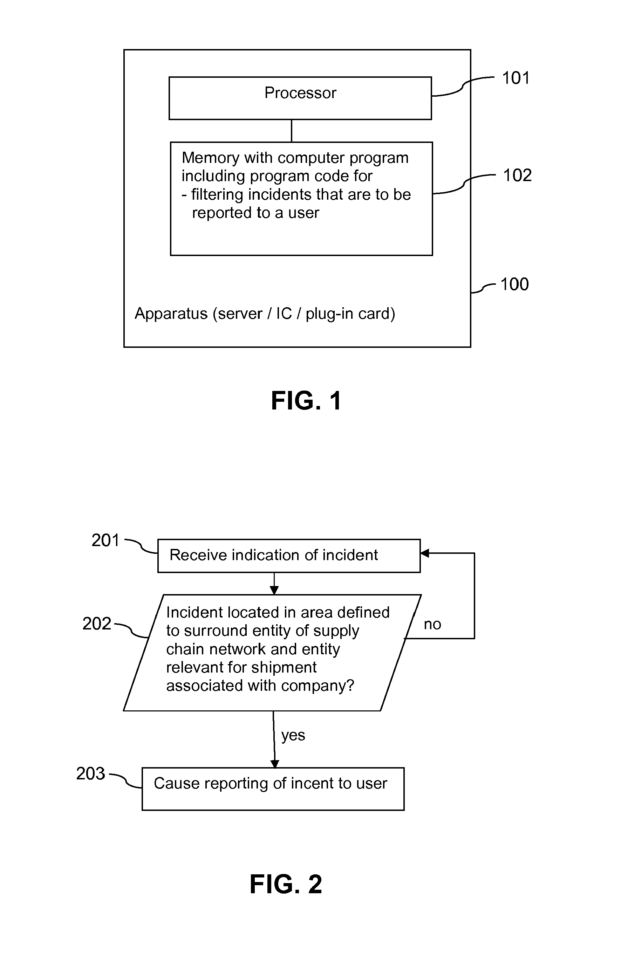

Figure 1 is a block diagram of an example embodiment of an apparatus 100 according to the invention

The apparatus comprises a processor 101 and a memory 102, which are connected to each other. The memory 102 stores a computer program with program code. The computer program is a program for filtering incidents that are to be reported to a user. Memory 102 is thus an example embodiment of a computer program product according to the invention and the stored computer program is an example embodiment of a computer program according to the invention. In addition, further computer programs, parameter values and/or any other kind of data could be stored in memory 102. Processor 101 could be a microprocessor or any other kind of processing unit. It could also be embedded into an integrated circuit (IC), for example together with memory 102 storing at least the computer program for filtering incidents.

Apparatus 100 could be for example a server or a module for a server, like an integrated circuit (IC) or a plug-in card. In another embodiment of an apparatus according to the invention, the apparatus could comprise a circuit, in which corresponding functions are implemented in hardware. Optionally, apparatus 100 could comprise any other desired components, like an interface to other apparatuses, user input means, user output means, etc.

Processor 101 is configured to execute computer programs that is stored in memory 102 and thereby to cause an apparatus to perform certain actions. The apparatus caused to perform the actions can be apparatus 100 or some other apparatus, for example a server comprising apparatus 100. An example of a sequence of such actions is illustrated in the flow chart of Figure 2.

The apparatus receives an indication of an incident. (action 201)

The apparatus determines whether the incident is located in an area that is defined to surround an entity of a supply chain network and whether the entity of the supply chain network is relevant for a shipment associated with a company. The entity is a supply chain node or a supply chain lane. (action 202) The determination can be a one step process or a two steps process using any desired order. In the latter case, it might only be determined whether an entity of the supply chain network is relevant for a shipment associated with a company if the incident has previously been determined to be located in the area that is defined to surround the entity; or it might only be determined whether an incident is located in the area that is defined to surround an entity of the supply chain network, in case the entity has previously been determined to be relevant for a shipment associated with a company. It is to be understood that a plurality of relevant entities could be identified this way for a single indicated incident. It is further to be understood that the location of the incident may be a region too. For instance, the location of an earthquake will not be limited to a particular geographical point, but occur in a larger region. In this case, determining whether the incident is located in an area that is defined to surround an entity of a supply chain network may mean determining whether there is an overlap between a region, in which the incident occurred, and the area that is defined to surround the entity.

The apparatus causes a reporting of the incident to a user in case at least one criterion is met. The at least one criterion comprises that it is determined that the incident is located in an area that is defined to surround an entity of the supply chain network and that the entity of the supply chain network is relevant for a shipment associated with the company. (action 203) Other criteria could be considered in addition. Depending on the type of the apparatus, for instance if the apparatus is a server comprising a communication interface for communication with a user device, the apparatus could also take care of the actual reporting of the incident to the user. The reporting could be caused in several ways; it could comprise for instance transmitting a message to a user; alternatively it could comprise for instance assembling information about the incident and providing access to the assembled information or enabling a download of the assembled information.

Actions 201 to 203 may constitute or belong to an example embodiment of a method according to the invention.

Apparatus 100 of Figure 1 and the method illustrated in Figure 2 could be employed for example in a comprehensive system supporting a supply chain incident monitoring.

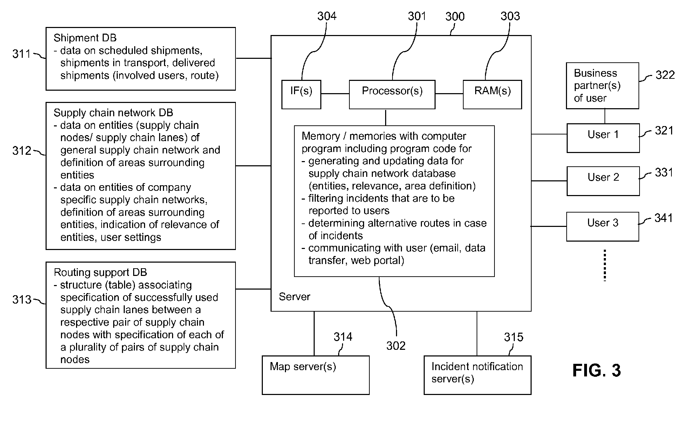

Figure 3 is a block diagram of an example embodiment of a system of the invention. The system enables a collection of data and a filtering of incidents for supporting an incident management at various companies.

The system comprises an incident management server 300, which includes at least one processor 301, at least one memory 302, at least one RAM 303 and at least one communication interface (IF) 304.

Memory 302 could be a general data and program memory of server 300. Memory 302 stores program code for generating and updating data for a supply chain networks database, program code for filtering incidents that are to be reported to users, program code for determining alternative routes in the case of incidents, and program code for communicating with users. The program code can belong to one or more computer programs. Memory 302 may store in addition other program code, various parameter values, like user settings, and/or any other kind of data.

RAM 303 is a main memory of processor 301.

The at least one communication interface 304 is configured to enable a communication with other devices, for example via a wired connection and/or via the internet.

Processor 301 is linked to each of components 302-304. It is configured to execute program code of memory 302. It is further configured to use RAM 303 for example for storing intermediate results and program code that is being executed. Processor 301 is moreover arranged to be able to receive instructions and data via communication interface 304 and to cause a transmission of instructions and data via communication interface 304.

Apparatus 100 of Figure 1 could thus correspond to server 300 or to a module, like a plug-in board, of server 300 comprising processor 301 and memory 302 or RAM 303 and, optionally, any other component.

It is to be understood that the tasks of server 300 could also be distributed to two or more servers.

The system of Figure 3 could comprise in addition various databases (DB) 311-313, including for instance a shipment database 311, a supply chain network database 312 and a routing support database 313. Server 300 is enabled to access the data in each of the databases, either directly or via some other server (not shown) controlling the access to the respective database. Any of these databases 311-313 could also be apart of server 300.

Shipment database 311 is configured to store data on scheduled shipments, data on shipments in transport and data on delivered shipments. The stored data could be data that is collected and used by a particular logistics service provider for managing shipments, and that is made available in addition for supporting an incident management. The data could include for each shipment a shipment identifier, an identity of sender and receiver, information on a scheduled route, a date of delivery and other kind of information. It is to be understood that the system of Figure 3 could also comprise several shipment databases 311 containing data collected by different logistics service providers.

Supply chain network database 312 is configured to store data about a general supply chain network, including data about entities of the general supply chain network. The entities can be supply chain nodes and supply chain lanes. The data could comprise for instance one or more sets of coordinates for a respective entity and/or a combination of coordinates and vectors. Alternatively, the data could comprise for instance a respective identifier for an entity, while geographical information about the entities is defined in detail in a separate map database making use of the same identifiers. The data about the general supply chain network could be supplemented by definitions of areas surrounding the entities. The definitions could comprise a general definition per type of entity, like a predetermined radius for all nodes and a predetermined corridor for all lanes. It would also be possible to use different definitions for different types of nodes and/or different definitions for different types of lanes. Different types of nodes could be for instance airports, see ports and railway stations. Different types of lanes could be for instance air lanes, see lanes, railway tracks and roads. It would also be possible to store individual definitions for each entity. It is to be understood that general definitions could also be stored as parameter values in memory 302 instead. Example values defining the size of an area may be a width of 5 km for a corridor surrounding a supply chain lane and a radius of 25 km for a circle area surrounding a supply chain node.

Supply chain network database 312 is furthermore configured to store data about various company specific supply chain networks, including data about entities of each company specific supply chain network. The entities can be supply chain nodes and supply chain lanes. The stored data could be supplemented by a definition of areas surrounding the entities, an indication of the relevance of at least some of the entities for the respective company and/or user settings. It is to be understood that user settings could also be stored as parameter values in memory 302 instead.

It is to be understood that it would also be possible to use different supply chain network databases for storing data about different supply chain networks.

Routing support database 313 is configured to associate for each of a plurality of pairs of supply chain nodes a specification of supply chain lanes that have been used successfully between a respective pair of supply chain nodes with a specification of the pair of supply chain nodes. The data could be stored using a suitable structure, for instance a table. The supply chain network could correspond for instance to the general supply chain network, for which data is stored in supply chain network database 312. That is, different supply chain lanes that have been used successfully in the past could be supply chain lanes that have been used for shipments associated with different companies.

The data of databases 311 to 313 could be stored in a single memory or in two or more memories. The term database can be understood in each case to relate only to the collection of data using a particular structure, but it could also denote a database management system including the data as well as some software application designed to enable a processor to create and manage the data. Such a processor could be processor 301 or any other processor within or external to server 300.

The system of Figure 3 could moreover comprise further servers, including for instance at least one map server 314 and at least one incident notification server 315.

Map server 314 could provide a map service and as such provide access to a map database.

Incident notification servers 315 could comprise servers of service providers distributing notifications on registered incidents; they could also comprise servers of logistics service providers informing about incidents relating to the respective logistics service provider. The incidents that are reported could comprise different types of incidents. They could comprise natural disasters, like earthquakes, storms, wildfire, flood, etc., socio political incidents, like terrorism, strike, etc., hazards, like utility failure, power or telecommunication outage, industrial fire, etc., and operational incidents, like supplier failure, cargo theft, etc. The incident notification server 315 of a logistics service provider could report in particular incidents relating to the logistics service provider's own premises or to its own vehicles, etc.

The system of Figure 3 could moreover comprise user devices 321, 331, 341 of several users. A user could belong for example to a company that relies on smooth logistics, either as a receiver of shipments or as a supplier of goods or both. A single company could have one or more users registered with server 300. A respective registration could be usable by a single user only or by a group of users. A device of a user could be for instance a smartphone or a computer with a communication interface and a user interface. The user interface could comprise a display or enable a connection to a display. It could further comprise for example a physical or virtual keypad. The communication interface could be for instance an interface enabling access to the Internet via cable, via a local area network (LAN), via a wireless local area network (WLAN) or via a mobile communications system.

The system of Figure 3 could moreover comprise devices 322 of business partners of one or more of the companies to which the users of user devices 321, 331, 341 belong. A business partner of a company could be for instance a supplier of the company; that is, any other company providing raw material, intermediate goods or final goods to the company. Alternatively, a business partner could be for instance a customer of the company; that is, any other company receiving raw material, intermediate goods or final goods from the company.

The system of Figure 3 can be modified in many ways by omitting components and/or by adding component. Such variations may result in further or alternative advantages. For example, the system could comprise components for supporting in addition a risk assessment in order to enable a rating of the resilience of the supply chain of a user and the creation of specific backup plans.

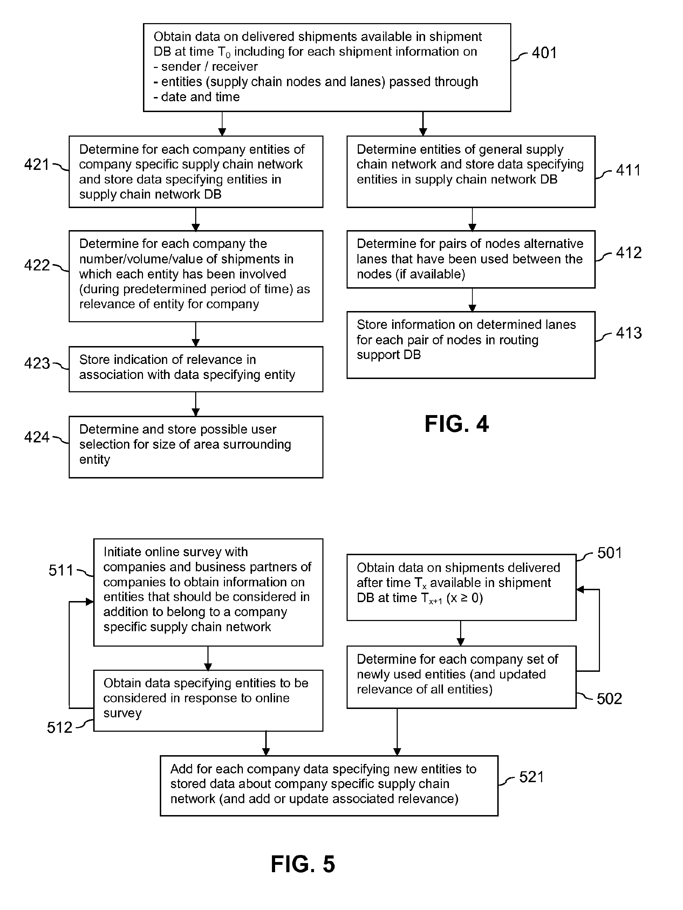

Figures 4 to 6 illustrate example operations in the system of Figure 3.

Figure 4 is a flow chart illustrating the gathering of information for storage in the supply chain network database 312 and/or in the routing support database 313. The operations are carried out by server 300 when processor 301 runs program code for generating data for a supply chain network database from memory 302.

Server 300 obtains data on delivered shipments that are available in shipment database 311 at a particular time T₀. (action 401) The data may include for each shipment information on the sender and the receiver of the shipment. The data may further include for each shipment information on the entities that have been involved in the delivery, for example all supply chain nodes and supply chain lanes the shipment has passed though. The data may further include for each shipment information on the date and the time of the delivery. The data may be obtained at server 300 in that it is received from a server with access to shipment database 311, either automatically or upon request, or it may be obtained at server 300 in that it is retrieved by server 300 from shipment database 311.

It is to be understood that the data may only be a small excerpt of the data on delivered shipments that is available in shipment database 311. The obtained data could be limited for example to particular companies as senders and/or receivers and/or or to a particular period of time of delivery. The obtained data could further be limited for example to selected kind of information on a respective shipment. For example, if shipment database 311 comprises information on the weight of each shipment, this information may not be needed by server 300 and thus not be obtained.

Based on the obtained data, server 300 may determine and store data relating to a general supply chain network on the one hand (actions 411-413) and data relating to company specific supply chain networks on the other hand (actions 421-424).

Based on the obtained data, server 300 may determine entities of a general supply chain network. (action 411) The general supply chain network may comprise all entities that have been involved, according to the obtained data, in the delivery of at least one shipment in the past, irrespective of receiver and sender. Data specifying the determined entities is stored or caused to be stored by server 300 in supply chain network database 312. The data for each entity may comprise an identifier of the entity.

Server 300 may determine in addition for respective pairs of supply chain nodes a plurality of supply chain lanes that have been used between the supply chain nodes in the past, if more than one supply chain lane is available. (action 412) The supply chain lanes that are determined for a respective pair of supply chain nodes thus constitute alternative supply chain lanes for transportations between the pair of supply chain nodes. Such alternative supply chain lanes can be determined for each possible pair of supply chain nodes in the general supply chain network or only for selected pairs of supply chain nodes, for example only for those supply chain nodes that have been passed through by a minimum number of shipments. For each alternative supply chain lane, it could be determined in addition how long it took to use the supply chain lane on an average. Moreover, the length of the alternative supply chain lanes in kilometers could be determined. In some embodiments, only supply chain lanes not requiring transshipment are considered; in some other embodiments, a supply chain lane in this context could also be a concatenation of several supply chain lanes which require transshipment at one or more supply chain nodes.

Server 300 may then store or cause storage of information on the determined supply chain lanes for each pair of supply chain nodes in routing support database 313, the information optionally including an indication of a time that can be expected to be required for each determined supply chain lane and/or an indication of the length of the supply chain lane and/or an indication of the type of the supply chain lane. (action 413)

Based on the obtained data, server 300 may furthermore determine entities of a plurality of company specific supply chain networks. (action 421) A company specific supply chain network may comprise all entities that have been involved, according to the obtained data, in the delivery of at least one shipment in the past, where a particular company was either the receiver or the sender. Alternatively, only those shipments could be considered where a particular company was the receiver or only those shipments could be considered where a particular company was the sender. The selected approach could be predetermined for all companies or it could be selected separately for each company according to user preferences for the particular company. Data specifying the determined entities is stored or caused to be stored by server 300 in supply chain network database 312. The stored data for each entity may comprise again an identifier of the entity. The same identifiers are used for the same entities of the general supply chain network and of each company specific supply chain network.

Server 300 may determine in addition for respective companies the number of shipments for which each entity of the company specific supply chain network has been involved. (action 422) The number - or some other value derived from this number - can be considered to correspond to a relevance of the entity for the respective company. A derived value could be for instance a percentage of concerned shipments compared to all delivered shipments for the company. Such a relevance of entities could be determined for all companies, or only for companies, for which some user selected a corresponding service option. The number of shipments could be determined for example based on all available data or only based on data on shipments that have been delivered during a predetermined period of time. It is to be understood some other parameter than the number of shipments could be used alternatively for determining the relevance of an entity for a company. Examples of such other parameters comprise the volume of shipments and the value of shipments for which the entity has been involved.

Server 300 may store or cause storage of an indication of the relevance for each entity in association with the data specifying the entity in supply chain network database 312. (action 423)

Server 300 may determine in addition for respective companies possible user selections with respect to a size of an area surrounding a respective entity of the company specific supply chain network. (action 424) Server 300 may store or cause storage of an indication of the selections in supply chain network database 312 or in memory 302 of server 300. The user selections may comprise for instance a radius for supply chain nodes and a corridor width for supply chain lanes, possibly with different values for different types of supply chain nodes and/or different types of supply chain lanes and/or for different levels of severity of incidents and/or for different categories of incidents. If the user does not wish to make a selection, predetermined default values may be used. In an alternative approach, it would also be possible to store an appropriate user selection for a size in association with each entity of a company specific supply chain network so that all available information on an entity can be obtained at once.

The data could be determined and stored anew from time to time in line with the operations of Figure 4, in order to ensure that the data is always up to date. Preferably, however, the existing data is updated on a regular basis in order to limit the required processing time.

Figure 5 is a flow chart illustrating a further gathering of information for supplementing the data stored in supply chain network database 312. The operations are carried out by server 300 when processor 301 runs program code for updating data of a supply chain network database from memory 302.

Server 300 may obtain data on shipments that have been delivered after a point of time Tₓ until a point of time Tₓ₊₁ with x ≥ 0. (action 501) That is, at first, server 300 may obtain data on shipments that have been delivered after point of time T₀ mentioned above with reference to action 401 and until point of time T₁

Server 300 may then determine for each company a respective set of newly used entities. (action 502) In addition, server 300 may determine an updated relevance of all entities based on the previously stored relevance in supply chain network database 312, if any, and on the newly obtained data. In the case of new entities, the relevance can be determined as described with reference to action 422. In the case of entities for which data has already been stored previously, a newly determined number could simply be added to the stored number, if the stored relevance corresponds to absolute numbers. If the stored relevance is a percentage, for example an arithmetic mean of the stored percentage and a determined percentage for the newer shipment could be determined as updated relevance.

Server 300 may add for a respective company data specifying new entities to the stored data about a respective company specific supply chain network. (action 521) If a relevance of a new entry and/or an updated relevance of a previously considered entity is determined in action 502, this relevance may equally be stored or caused to be stored in supply chain network database 312.

Alternatively or in addition to supplementing the data stored for the company specific supply chain networks based on data that is obtained from shipment database 311, server 300 could also use other sources for updating the data that is stored for the company specific supply chain networks.

For example, server 300 could initiate an online survey with companies on a regular basis. (action 511) Such online surveys might only be performed for companies who selected a corresponding service option. The online survey requests a user acting on behalf of a respective company to provide data on entities that are of relevance for the company specific supply chain network. This may allow considering entities as well that are not involved in the delivery of shipments for a company by a logistics service provider keeping and using shipment database 311. Such entities may be used in the delivery of shipments for the company by another logistics service provider or by the company itself. The data on entities that may be provided by a company may comprise coordinates of a respective entity along with an indication of the type of entity and possibly an indication of the relevance of the entity. Alternatively, the online survey could present a map, which enables a user acting on behalf of the company simply to mark entities presented on the map. The map data could be obtained by incident management server 300 for example from map server 314.

Potentially, the survey could be extended to business partners of the companies. Such a survey could be performed directly with the business partners or via the companies. This way, a complete supply chain of a company could be covered by the company specific supply chain network. For example, if a business partner provides a semifinished good to the company, also the shipments of raw material from some other supplier to the business partner may affect the business of the company. The survey could also be an automatically extending process. For example, a company may indicate in the response to the survey to server 300 that it is receiving goods from supplier A. Server 300 may then automatically send the survey in addition to supplier A. Supplier A may indicate in the response to the survey that it is receiving goods from suppliers B and C. Server 300 may then automatically send the survey in addition to suppliers B and C, etc. Alternatively, if an extended survey is to be performed via the concerned company, the company could send the survey to supplier A. Supplier A could send a response to the survey to the company, indicate in the response that it is receiving goods from suppliers B and C, and automatically forward the survey to suppliers B and C. Suppliers B and C could send a response to the survey via supplier A to the company, indicate in the response that they are receiving goods from further suppliers and automatically forward the survey to the further suppliers, etc. The company may forward the collected responses to the surveys to server 300. It is to be understood that many variations of such an automatically extending process could be implemented. For example, the survey could be forwarded in a chain to the company and its suppliers, while the response to the survey could always be provided to server 300, or the company could automatically send the survey directly to all known and to all indicated suppliers.

The online survey could be initiated for instance by sending an email to a respective user belonging to a company with a link to a web site enabling an entry of the required data or a selection of the required data.

Server 300 obtains the data specifying entities that is provided by the companies and/or by business partners of the companies in response to the online survey. (action 512)

Also in this case, server 300 may add data specifying new entities to the stored data about a respective company specific supply chain network for a respective company. (action 521) The data may be added automatically by server 300.

It is to be understood that server 300 could supplement in addition the data specifying entities of the general supply chain network in supply chain network database 312 based on the obtained data. However, it may be preferred to update the data on alternative routes between pairs of supply chain nodes in routing support database 313 only based on additional data obtained from shipment database 311, not based on additional data obtained in response to an online survey.

The data that is assembled, stored and updated in the operations illustrated in Figures 4 and 5 can be used as a basis for an incident management.

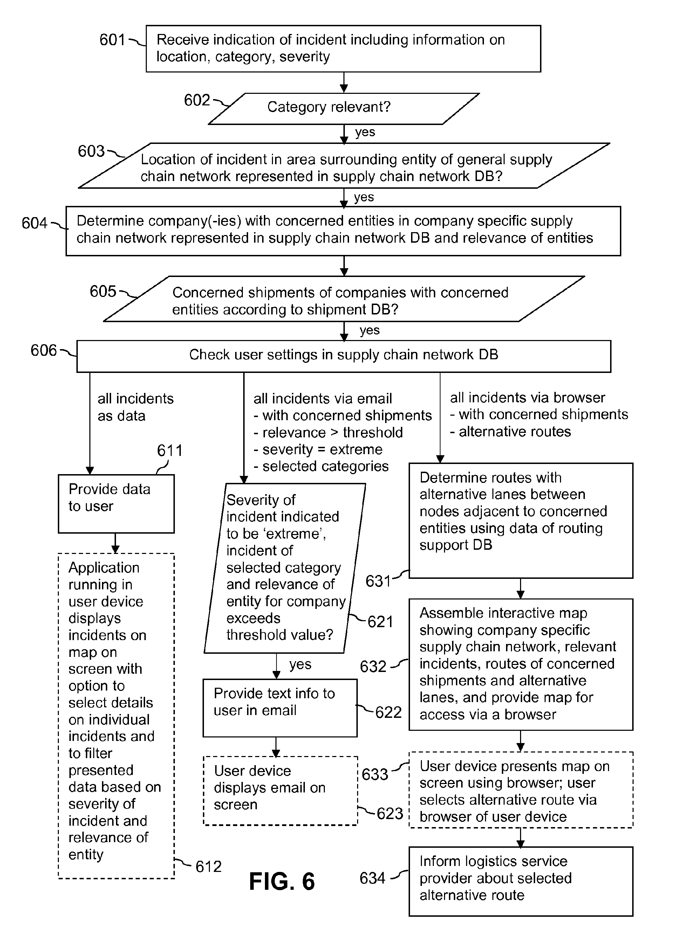

Figure 6 is a flow chart illustrating a filtering of incidents that are reported to users. The operations indicated with solid lines are performed by server 300 when processor 301 executes program code from memory 302. The operations indicated with dashed lines may be performed by a user device.

Incident notification server or servers 315 provide indications of registered incidents to server 300. The indication includes information on the location of the incident and possibly information on a category of the incident and/or on the severity of the incident. A category of an incident could be for instance "transportation", "security", "fire", "terrorism" and/or any of various other individual categories. An individual category may thus relate to the type of incident and equally to the effect it may have; and a category of an incident could be an individual category or a combination of individual categories. Optionally, the categories could also be structured in the form of main categories and sub-categories. An exemplary main category could be for instance aviation and associated exemplary sub-categories could comprise airplane crash and airport closure. The indicated severity of an incident could be for instance minor, moderate, high or extreme. However, any other classification can be used as well. Different incident notification servers 315 could also use different classifications, which may be harmonized by the program code executed by processor 301. The incidents that are indicated to server 300 may be all incidents registered at an incident notification server 315 or only incidents that correspond to a requested profile.

Server 300 receives the indication of an incident. (action 601)

Server 300 may then determine whether the category of the incident is relevant to logistics. (action 602) Alternatively, a respective incident notification server 315 could also be instructed to report only incidents of predetermined categories.

In case the incident is not relevant to logistics, the indication is discarded and the process is ended. Server 300 may then wait for receipt of the next indication of an incident.

In case the incident is relevant to logistics, server 300 may further determine whether the indicated location of the incident lies in an area surrounding an entity of the general supply chain network represented in supply chain network database 312. (action 603) To this end, server 300 accesses the data in supply chain network database 312. The data could be checked in various ways. Server 300 could determine the location of each entity, determine the surrounding area based on available, predetermined parameters and check whether the location of the incident lies in the area. In order to save processing time, however, the stored data could also be presorted. For instance, the surface of earth could be divided into regions, and the data for each entity could be stored with association to a region. In the case of an incident, only those entities could be considered that are located in the region in which the incident occurred and in adjacent regions. The size of each region should be larger than the possible maximum size of any area for any entity.

If the indicated location of the incident does not lie in an area surrounding an entity of the general supply chain network, the indication is discarded and the process is ended. Server 300 then waits for receipt of the next indication of an incident.

If the indicated location of the incident lies in an area surrounding an entity of the general supply chain network, server 300 determines the company or the companies, for whom any of the concerned entities belongs as well to the respective company specific supply chain network represented in supply chain network database 312. (action 604) To this end, server 300 accesses again the data in supply chain network database 312. If the stored data for each entity of the general supply chain network and for each entity of all company specific supply chain networks comprises an identifier for the entity, server 300 could check with limited processing effort whether the identifier for any of the determined entities of the general supply chain network matches a stored identifier for any entity of any company specific supply chain network. Optionally, if a user belonging to a company had specified a size of different types of areas, it could be determined in addition in action 604, whether the incident is equally located in the area surrounding the entity as defined by the user. If this is not the case, the entity is not considered as concerned entity for this particular company. Server 300 could retrieve in addition a stored indication of the relevance of the concerned entities for each of the determined companies from supply chain network database 312.

Server 300 may then access the data in shipment database 311 for determining whether there is a shipment for any determined company that may be concerned by the incident in an appropriate area surrounding the concerned entities. (action 605) Such a concerned shipment could be a shipment that is presently located at the entity, for instance at an airport waiting for a connection flight or on a road on which it is being carried in a truck. A concerned shipment could equally be a shipment that is scheduled to pass the entity during its delivery.

If there is no concerned shipment for a particular company, the company is not considered anymore. If there is no concerned shipment for any registered company, the process is ended and server 300 may wait for a new indication of an incident.

If there is a concerned shipment for at least one company, server 300 may check further user settings for the company. (action 606) Such user settings may be entered by a user belonging to the company when the user registers for an incident notification service by accessing a corresponding web page provided by server 300 to this end via a browser of a user device 321. In addition, they may be amended by the user for instance by accessing a corresponding web page provided by server 300 to this end via a browser of a user device 321. User settings may be stored in memory 302 of server 300 or in some other memory of server 300, or they may be stored in supply chain network database 312, or they may be stored in some other storage. The user settings may define which information is provided to a user and how.

Subsequent operations may depend on these user settings. Since the user settings may be different for different companies, also the subsequent operations may be different for different companies. Some examples will be described in the following with reference to actions 611 to 634 of Figure 6.

A user of a first company may have requested to be provided with information about all incidents that potentially affect entities of the company specific supply chain network of the company, and that the information is provided in the form of a file. A user may select this option, for instance, in case the company uses several logistics service providers in addition to a logistics service provider keeping shipment database 311, or in case the company delivers various shipments with own vehicles.

Server 300 therefore provides a corresponding file to user device 321 of the user of the first company via the Internet. (action 611) A file could be provided for each individual incident, or it could be provided for all incidents that occurred during a predetermined period of time. A file could comprise for a respective incident an indication of the location of the incident, an indication of the time of the incident, an indication of the category of the incident, an indication of the severity of the incident, and an indication of concerned entities of the company specific supply chain network of this company as determined in action 604, possibly with an additional reference to concerned shipments and concerned entities as determined in action 605. Various other types of information relating to the incident could be included in addition. For example, if the indication of an incident provided by an incident notification server 315 to server 300 includes information on the expected duration of the incident, this information could be included in the file as well. In addition, the information could include an indication on the relevance of concerned entities for the company. The file may be transmitted to user device 321 for instance as an attachment to an email, or it may be downloaded by user device 321 at regular intervals using a web service provided by server 300.

At user device 321, an application may be running, which uses the received information on incidents as input data. (action 612) The application may be stored in a memory of user device 321 and executed by a processor of user device 321. The application may process the received data to display the location of a detected incident on a map on a screen of user device 321 or on a screen connected to user device 321. The actual map data may be obtained by user device 321 for example from a map server 314 via the Internet. The application could be configured to provide an option to a user to select individual incidents and to show details on a selected incident. The application could also be configured to enable a user to filter presented data, for instance based on the severity of the incidents and on the relevance of the concerned entities for the first company.

A user of a second company may have requested to be provided only with information about incidents that are indicated to have an extreme severity, that are of a particular category, that potentially affect shipments of the second company as determined in action 605, and that potentially affect entities of the company specific supply chain network which have a relevance for the second company exceeding a threshold value. While server 300 may consider only incidents of categories that are relevant to logistics in the first place, the user may further limit the categories of incidents on which he desires to receive information. For instance, if the categories are structured in the form of main categories and sub-categories, and server 300 considers received incidents that are relevant - among others - to aviation and shipping traffics as main categories, a user may decide to be informed only about incidents in selected sub-categories of these considered main categories. He may wish to be informed, for instance, only about significant delays of flights and shipping traffic, not about minor delays, etc. The user of the second company may further request the information to be provided in the form of a text of an email.

In this case, server 300 determines at first, whether the severity of the incident has been indicated to be extreme by incident notification server 315, whether the incident is of a selected category and whether the relevance of the concerned entity of the company specific supply chain network exceeds a threshold value. (action 621) The threshold value may be predetermined or set by the user in the user settings.

If any of the conditions is not met, the process is ended for the particular user. Otherwise, server 300 assembles a text with information on the incident, includes the text in an email and causes transmission of the email to user device 331 of the user of the second company. (action 622) The text could indicate for instance the category of the incident, identify the concerned entities - for example in the form of an airport name or a road number - and contain information on the concerned shipments. If available, the text information could also include various other types of information, like an expected duration of the effects of the incident, or a specific description of the incident, if available from the indication received at server 300 from incident notification server 315.

User device 331 displays the email on a screen of user device 331 or on a screen connected to user device 331. (action 623)

A user of a third company may have requested to be provided with information about incidents that potentially affect shipments of the third company as determined in action 605 and with information on alternative routes. The user may further request the information to be provided via a web service when accessing the web service via a browser of user device 341 of the user.

In this case, server 300 may determine at first possible alternative routes for the concerned shipments. Each possible alternative route comprises a supply chain lane or a combination of supply chain lanes between two supply chain nodes on the scheduled route that are not concerned by an incident and that are adjacent to entities concerned by the incident. (action 631) The supply chain lanes are determined using the data about the alternative supply chain lanes for a respective pair of supply chain nodes in routing support database 313. If there is more than a predetermined number of possible alternative routes that can be determined based on the stored data, only the alternative supply chain lanes associated in routing support database 313 with the shortest total transport time may be determined for further use.

Server 300 may then assemble an interactive map presenting the company specific supply chain network, relevant incidents, scheduled routes of concerned shipments and selectable alternative routes. For each selectable alternative route, the time required for the route may be indicated in addition. The data on the entities of the supply chain network is available to server 300 from supply chain network database 312. If supply chain network database 312 comprises only identifiers of the entities and not the actual location, the missing information is obtained from map server 314. The map may be provided by server 300 for access by user device 341 via a browser. (action 632)

User device 341 presents the map on a screen of user device 341 or on a screen connected to user device 341 using a browser running in user device 341. (action 633) The user may now select one of the alternative routes via the browser.

Upon detection of such a selection, server 300 may inform a logistics service provider taking care of the concerned shipment about the selected alternative route. (action 634) The logistics service provider could then reschedule the shipment via the selected alternative route.

Depending on user settings, the logistics service provider may determine whether using the alternative route would result in a change of costs to the company. The change of costs may be indicated via server 300 to user device 341 for confirmation of the selection, before the scheduled route is actually changed by the logistics service provider. The user of the third company may then decide whether it is preferable to waiting for the end of the effects of the incident or to take the alternative route.

Action 634 could thus be understood as an embodiment of determining and causing an action to be carried out in response to the incident. Actions 632 and 633 could be understood as an embodiment of providing a suggestion of an action to be carried out in response to the incident to a user.

If the shipment is handled by the third company directly, user device 341 could also inform a logistics unit about a preferred new route instead. For example, if a truck of the third company carrying a particular shipment is on its way to Munich airport, but there is an incident resulting in a cancellation of all or many flights starting from this airport over a longer period of time, the driver of the truck could be instructed to go to Frankfurt airport instead, if the map shows to the user that this is an alternative route to the destination airport. The information could be provided to a communication unit integrated into the truck or to a portable device of the driver.

Thus, actions 601-606 and 621 may be performed when processor 301 executes program code for filtering incidents that are to be reported to users; actions 611, 622 and 632 may be performed when processor 301 executes program code for communicating with users; and actions 632 and 634 may be performed when processor 301 executes program code for determining alternative routes in the case of incidents or, more generally, when processor 301 executes program code for automatically triggering an action in response to relevant incidents.

It is to be understood that the presented operations may be modified in many ways. For instance, actions may be added or omitted, or the order of actions may be changed. It is further to be understood that indications of incidents do not have to be processed subsequently; they could also be processed in parallel. The operations as such may also be modified in many ways.

For example, with a variation of actions 603 and 604 of Figure 6, it would be possible to avoid the need of generating, storing and evaluating data about a general supply chain network. Instead, it could be determined right away whether an incident is located in an area surrounding an entity of any company specific supply chain network, with the size of the area being either predetermined or defined by a user. This would avoid the need to consider at first areas of predetermined size surrounding entities of a general supply chain network in action 603 and then areas of a size as defined by a user - if any - surrounding entities of a company specific supply chain network in action 604. However, checking at first entities of a general supply chain network as presented above with reference to action 603 may avoid a multiple consideration of a considerable number of entities that are clearly not concerned.

To provide a further example of a variation, a user could also be enabled to provide node or lane specific settings. A user could decide, for instance, to generally monitor incidents via a browser for keeping track of the general situation, but select an additional notification by email for incidents that are of potential relevance for particularly relevant nodes.

It is to be understood that incidents could also be reported to several users of a company. User settings could then be enabled to be provided only once per company or individually for each user or separately for a respective group of users.

It is moreover to be understood that while a company specific supply chain network could be defined for a particular company, based for instance on shipments associated with the particular company and/or based on input of a user belonging to the particular company, other parties could be allowed to make use of the data that is stored for the supply chain network of this particular company, for instance by requesting notifications on incidents potentially affecting the company specific supply chain network. Such other parties could be required to rely on general user settings for the company, or they could be enabled to define their own settings for notifications of incidents. Such other parties could comprise for instance customers of the particular company, a parent company of the particular company or subsidiary companies of the particular company, etc.

The incidents could be presented on the map in actions 612 and 633 for a predetermined time only. The presentation could be renewed, in case the incident is reported again, preferably approximately after the predetermined time. Alternatively, incident servers 315 could provide for each incident a further indication that the incident has no effect anymore. A presented incident could then be removed again from the map as soon as the further indication is received.

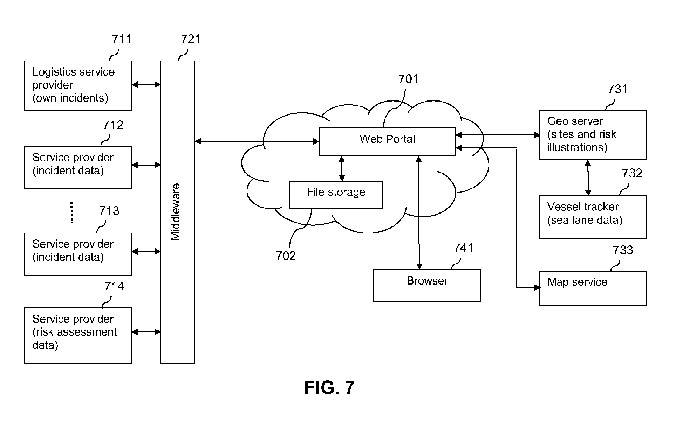

Figure 7 is a further block diagram of an example embodiment of a system according to the invention.

The system could provide comprehensive support for a supply chain disruption management of various companies, including support of a risk assessment as well as support of an incident monitoring for each company. The risk assessment may include an evaluation of the importance of entities of the supply chain of a respective company, for example the importance of specific suppliers, markets, supply chain lanes and supply chain nodes. The risk assessment may further include an evaluation of the exposure and vulnerability of these entities based on historical data on incidents close to the entities. This allows, for example, rating the resilience of the supply chain, creating backup plans for the case of incidents affecting key entities and/or considering alternatives for key entities at risk hotspots. The incident monitoring may comprise the collection of information on current incidents potentially affecting the supply chain to enable near real-time alerts to users.

The system includes to this end a web portal 701 that is able to access file storage 702. Web portal 701 and file storage 702 may be dedicated physical entities, or their functions may be realized by making use of cloud computing. The functions of web portal 701 could basically correspond to the functions offered by incident management server 300 of Figure 3. The functions of file storage 702 could basically correspond to the functions offered by databases 311-313 of Figure 3.

Web portal 701 is able to communicate with several service providers 711-714 via a middleware 721. The service providers may include a logistics service provider 711 that is configured to report own incidents to web portal 701; other service providers 712, 713 may be configured to collect and forward incident data to web portal 701. The data that is made available by service providers 711-713 could basically correspond to the data that is made available by incident notification server(s) 315 of Figure 3. Service provider 714 may be configured to collect and report risk assessment data. The risk assessment data may be based on statistical risk evaluations of various incidents that occurred in the past, like earthquakes, tornados, volcanic eruptions or floods.

Furthermore, web portal 701 is able to communicate with a geo server 731. Geo server 731 may store data on sites and associated risks. The sites may be associated to particular companies and the risks may be determined by evaluating risk assessment data that is provided by service provider 714.

Geo server 731 is moreover able to communicate with a vessel tracker 732. Vessel tracker 732 may provide data on sea lanes, which are determined by tracking vessels, to geo serer 731.

Web portal 701 is further able to communicate with a map service 733. Map service 733 may basically correspond to the service that is offered by map server(s) 314 of Figure 3.

Web portal 701 can be accessed by means of a browser 741 of a computer. Such a computer could correspond basically to a user device 321, 331, 341 of Figure 3.

Some of the operations in the system of Figure 7 may be similar to the operations in the system of Figure 3 and thus include a gathering of information on supply chain networks, an incident monitoring, an incident filtering, an incident reporting and a triggering of actions in response to a detection of certain incidents. In addition, the operations in the system of Figure 7 may support a risk assessment, including the creation of backup plans for various companies. Such backup plans may help a company to react without delay to certain reported incidents.

Depicted or described connections between components are generally to be understood to be functional connections. They can be implemented as direct links or as indirect links via several other components. The order of presented actions is not mandatory; alternative orders are possible. Actions can be implemented in different ways. They could be implemented in software using program instructions; or they could be implemented in hardware; or they could be implemented making use of a combination of hardware and software.

It is to be understood that the described embodiments are examples only, which may be modified and/or supplemented in many ways within the scope of the claims. In particular, any feature described for a particular embodiment can be used by itself or in combination with other features in any other embodiment. Each feature that has been described for an embodiment of a particular category can also be used in an equivalent manner in an embodiment of any other category.

## Claims

1. A method, performed by at least one apparatus (100, 300), the method comprising:
receiving an indication of an incident;
determining whether the incident is located in an area that is defined to surround an entity of a supply chain network, the entity being one of a supply chain node and a supply chain lane, and whether the entity of the supply chain network is relevant for a shipment associated with a company; and
causing a reporting of the incident to a user in case at least one criterion is met, the at least one criterion comprising that it is determined that the incident is located in an area that is defined to surround an entity of a supply chain network and that the entity of the supply chain network is relevant for a shipment associated with the company.

2. The method according to claim 1, further comprising at least one of:
making use of data about the supply chain network stored in a supply chain network database (312) as a basis for determining whether the incident is located in an area that is defined to surround an entity of a supply chain network;
making use of data about the supply chain network stored in a supply chain network database (312) as a basis for determining whether the incident is located in an area that is defined to surround an entity of a supply chain network, wherein the supply chain network is a company specific supply chain network;
making use of data about the supply chain network stored in a supply chain network database (312) as a basis for determining whether the incident is located in an area that is defined to surround an entity of a supply chain network, wherein the supply chain network is a company specific supply chain network and wherein the data about the supply chain network results from a modelling of the company specific supply chain network based on shipments transported for the company in the past; and
making use of data about shipments associated with the company stored in a shipment database (311) of a logistics service provider as a basis for determining whether the entity of the supply chain network is relevant for a shipment associated with the company.

3. The method according to claim 1 or 2, wherein the entity of the supply chain network is relevant for a shipment associated with the company if at least one of:
a shipment associated with the company is present at the entity of the supply chain network; and
a shipment associated with the company is scheduled to arrive at the entity of the supply chain network.

4. The method according to any one of claims 1 to 3,
wherein the entity is a supply chain node and wherein the area surrounding the supply chain node is a circular area with a predetermined radius; or
wherein the entity is a supply chain lane and wherein the area surrounding the supply chain lane is a corridor of a predetermined width.

5. The method according to any one of claims 1 to 4, wherein a size of the area surrounding the entity is defined by one of:
a default value;
one of a plurality of default values predetermined for different severity levels of incidents;
one of a plurality of default values predetermined for different types of entities;
one of a plurality of default values predetermined for different categories of incidents;
a value defined by a user;
one of a plurality of values defined by a user for different severity levels of incidents;
one of a plurality of values defined by a user for different types of entities; and
one of a plurality of values defined by a user for different categories of incidents.

6. The method according to any one of claims 1 to 5, wherein the incident is reported to the user only, in case at least one additional criterion is met, the at least one additional criterion comprising at least one of:
the incident is an incident of a predetermined category of incidents;
the incident is an incident of a category of incidents selected by a user;
the incident is at least of a predetermined severity;
the incident is at least of a severity selected by a user; and
the entity is of a minimum relevance for the company.

7. The method according to any one of claims 1 to 6, further comprising, in case it is determined that the entity of the supply chain network is relevant for a shipment associated with the company, at least one of:
determining an action to be carried out in response to the incident;
causing an action to be carried out in response to the incident;
providing a suggestion of an action to be carried out in response to the incident to the user;
determining alternative routes to be used for the shipment; and
determining alternative routes to be used for the shipment based on data obtained from a database (313) storing information on routes that have been taken successfully for previous shipments.

8. The method according to any one of claims 1 to 7, the method comprising
in case it is determined that the incident is located in an area that is defined to surround an entity of a supply chain network, determining whether the entity of the supply chain network is relevant for a shipment associated with any of a plurality of companies; and
causing a reporting of the incident to a respective one of a plurality of users in case at least one criterion is met, the at least one criterion comprising that it is determined that the entity of the supply chain network is relevant for a shipment associated with a respective company.

9. The method according to any one of claims 1 to 7, wherein the supply chain network is a company specific supply chain network, the method comprising
determining for a plurality of companies whether the incident is located in an area that is defined to surround an entity of a company specific supply chain network of a respective company;
in case it is determined that the incident is located in an area that is defined to surround an entity of at least one company specific supply chain network, determining whether the entity of the at least one company specific supply chain network is relevant for a shipment associated with the respective company of the at least one company specific supply chain network; and
causing a reporting of the incident to a respective user in case at least one criterion is met, the at least one criterion comprising that it is determined that the entity of the company specific supply chain network is relevant for a shipment associated with the respective company.

10. An apparatus (100; 300) comprising means (101, 102; 301, 302) for causing performance of the actions of the method of any one of claims 1 to 9.

11. The apparatus according to claim 10, wherein the apparatus is one of:
a server (300); and
a component for a server (300).

12. A system comprising means (300) for causing performance of the actions of the method of any one of claims 1 to 9.

13. A use of a report of an incident to a user caused by the system of claim 12 for an incident monitoring.

14. A computer program configured to cause at least one apparatus (300) to perform the actions of the method of any one of claims 1 to 9 when executed by at least one processor (301).

15. A computer program product (302) storing a computer program according to claim 14.
